# EUROPÄISCHE PATENTSCHRIFT

(11) **EP 1 270 106 B1**
(45) Veröffentlichungstag und Bekanntmachung des Hinweises auf die Patenterteilung: **04.06.2003**
(21) Anmeldenummer: 01114118.1
(22) Anmeldetag: 11.06.2001
(51) Int. Cl.: B21D 26/02, C09K 3/12

(54) **Verfahren zur wirkmedienbasierten Umformung von Blech-Werkstücken und Verwendung eines Wirkmediums bei diesem Verfahren**
Method for the pressure medium based forming of sheet metal workpieces and use of pressure medium in this method
Méthode de formage des tôles par agent sous pression et utilisation d' un agent dans cette méthode

(43) Veröffentlichungstag der Anmeldung: 02.01.2003
(73) Patentinhaber: BLZ Bayerisches Laserzentrum Gemeinnützige Forschungsgesellschaft mbH, 91058 Erlangen (DE)
(72) Erfinder: Celeghini, Martino, 90419 Nürnberg (DE)
(74) Vertreter: Hübner, Gerd, Dipl.-Phys.

(56) Entgegenhaltungen:
- DE-A- 3 130 282
- DE-A- 19 535 870
- DE-C- 577 744

## Beschreibung

Die Erfindung betrifft ein Verfahren zur wirkmedienbasierten Umformung von Blech-Werkstücken mit den im Oberbegriff des Anspruches 1 angegebenen Merkmalen, und die Verwendung eines flüssigen Wirkmediums bei der Durchführung dieses Verfahrens gemäß dem Oberbegriff des Anspruches 10. So ein Verfahren und eine Verwendung sind aus der DE-A-19535870 bekannt.

Zum Hintergrund der Erfindung ist festzuhalten, daß bei den Fertigungsverfahren zur Herstellung von Werkstücken aus Blech in erster Linie Tief- und Streckziehverfahren zu nennen sind. Hierbei werden überwiegend starre Werkzeuge mit einer stationären Matrize und einem für die Umformung des Blech-Werkstückes sorgenden Patrizenstempel eingesetzt. Bei sehr komplexen Formen und Strukturen stoßen diese rein mechanischen Formgebungsprozesse im Zusammenhang mit der Belastung des Werkstücksmaterials an ihre Grenzen.

Es wurden dementsprechend Fertigungsverfahren entwickelt, bei denen die Umformung von Blech-Werkstücken nicht durch starre Werkzeuge, sondern durch den isostatischen Druck eines Fluids, also eines Gases oder insbesondere einer Flüssigkeit erfolgt. Die Flüssigkeit ersetzt also den Stempel oder die Matrize eines herkömmlichen mechanischen Werkzeuges und wird gängigerweise als "Wirkmedium" bezeichnet. Dementsprechend wird die damit vorgenommene Umformungstechnologie als "wirkmedienbasierte Blechumformung" bezeichnet. Einen breiten Überblick über den Stand dieser Technologie gibt der Fachaufsatz "Metall Forming of Tubes and Sheets with Liquid and Other Flexible Media" von Prof. Dr. D. Schmoeckel et al, in "Annals of the CIRP Vol. 48/2/99", Seiten 1 bis 17.

Eine besondere Verfahrensvariante bei der wirkmedienbasierten Blechumformung ist nun das Innenhochdruck-Umformen, bei dem zwei Blech-Werkstücke gedoppelt sind und mit ihren Flanschbereichen gemeinsam in eine Werkzeugform eingespannt werden. In die Kavität zwischen den beiden Blech-Werkstücken wird mittels eines sogenannten Andocksystem in Form z. B. einer zwischen die Bleche eingesetzten Leitungslanze ein Wirkmedium mit hohem isostatischen Druck eingebracht, wodurch die beiden Blechzuschnitte entsprechend der sie umgebenden Werkzeugform "aufgeblasen" und in einem Verfahrensgang ausgeformt werden.

Gleichgültig, ob nun ein Blech-Werkstück durch einseitige Druckbeaufschlagung in einer Werkzeugform oder zwei Werkstücke im Zuge des Innenhochdruck-Umformens gleichzeitig beaufschlagt werden, stellt sich grundsätzlich das Problem, daß die das Wirkmedium aufnehmende Kavität in der Werkzeugform nach außen dicht sein muß, damit der isostatische Druck des Wirkmediums aufgebaut werden kann. Die Dichtpartner sind z. B. bei Verwendung eines Blech-Werkstückes die Werkzeugfläche und der Flansch des einen Blech-Werkstückes. Beim Innenhochdruck-Umformen sind die Dichtpartner z. B. die Flansche der beiden aufeinander liegenden Blech-Werkstücke, die durch entsprechende Spannwerkzeuge aufeinander gepreßt werden, oder auch Komponenten des Andocksystems.

Die Dichtheit der das Wirkmedium aufnehmenden Kavität ist nun um so schwieriger zu beherrschen, je komplexer die Randgeometrie der Dichtpartner und je höher der isostatische Umformdruck des Wirkmediums ist.

Schließlich ist z. B. aus der DE 195 35 870 A1 das Innenhochdruck-Umformen von randseitig nicht miteinander verschweißten Blechzuschnitten offenbart, bei denen ein Fließen des Flanschmaterials aus dem Spannbereich in den eigentlichen Formbereich während des Umformvorgangs zur Begrenzung z. B. der Dehnbeanspruchung der Blechzuschnitte erlaubt wird. Auch dieser "Freiheitsgrad" der Dichtpartner im Bereich der Einspannung der Blech-Werkstücke verschärft das Dichtheitsproblem.

Zur Lösung dieser Dichtungs-Problematik schlägt die Erfindung nun vor, bei der wirkmedienbasierten Umformung von Blech-Werkstücken dem Wirkmedium ein Dichtmedium beizumischen, das sich im Falle einer Lekkage des Wirkmediums aus der Kavität vor das Leck legt und dieses zusetzt.

Die Erfindung macht dabei von einem strömungstechnischen Effekt Gebrauch, wie er beispielsweise bei der Filtration und insbesondere in Filterpressen eingesetzt wird. Das Leck in der Kavität wirkt quasi als Filtrationsöffnung, durch die das Wirkmedium strömt und dabei das Dichtmedium mitführt. Das Dichtmedium, dessen Dimensionen so ausgelegt sind, daß ein Austreten aus dem Leck verhindert wird, legt sich vor die Öffnung, wobei bis zum vollständigen Zusetzen des Lecks durch das Dichtmedium weitere Mengenanteile von letzterem nachgefördert werden. Es bildet sich also quasi ein "Propf" aus dem Dichtmedium vor dem Leck.

Da das Wirkmedium aus einem breiten Spektrum von Materialien, beginnend von normalem Wasser über Hydrauliköl oder Hydraulikflüssigkeit in Form von Öl-in-Wasser-Emulsionen bis Hochtemperatur-Wirkmedien in Form von flüssigen Salzen bei Temperaturen von mehreren 100° stammen kann, sind entsprechend auch sehr verschiedene Dichtmedien einzusetzen. In aller Regel und für herkömmliche Wirkmedien, wie Wasser oder Hydrauliköl haben sich Festkörperpartikel in Form von Fasern mit einer Faserlänge in der Größenordnung von 0,1 mm bis 2,0 mm als tauglich für die Abdichtung erwiesen. Dabei können Naturfasern, insbesondere Baumwoll-, Zellulose- oder Jute-Fasern genauso verwendet werden wie vorzugsweise verzweigte Polymer-Füllstoff-Fasern aus Polyethylen oder Polyacrylnitril.

Da die häufig auftretenden Lecks meist Mikrolecks im Bereich von einigen Mikrometer bis wenige Zehntel Millimeter sind, ist die angegebene Größenordnung der Faserlänge sinnvoll.

Je nach Wirkmedium können auch hochviskose oder gelartige Flüssigpartikel als Dichtmedium verwendet werden, die dem Wirkmedium vor dem Umformprozeß zugesetzt oder bei einer Druckbeaufschlagung des Wirkmediums beispielsweise durch eine Art "Auto-Gelierung" aus sich heraus entstehen. Ein ähnlicher Dichteffekt kann auch mit Monomeren als Dichtmittel erzielt werden, die unter bestimmten, im Flansch herbeizuführenden Bedingungen polymerisieren und die gewünschte Dichtwirkung erzeugen.

Neben dem oben erörterten Verfahren betrifft die Erfindung auch das Wirkmedium zur Verwendung bei der Durchführung dieses Verfahrens als solches, wobei das Wirkmedium durch ein beigemischtes Dichtmedium gekennzeichnet ist.

Ein Ausführungsbeispiel der Erfindung wird in der folgenden Beschreibung anhand der beigefügten Zeichnungen näher erläutert. Es zeigen:
- Fig. 1 und 2: höchst schematische ausschnittsweise Schnittdarstellungen einer Werkzeugform mit zwei zum Innenhochdruck-Umformen eingespannten Blech-Werkstücken im Leck- bzw. abgedichteten Zustand.
- Fig. 3: schematische Verfahrenszwischenschritte beim wirkmedienbasierten Umformen von Blech-Werkstücken mit Dichtmittel, und
- Fig. 4: ein Kurvenschaubild der Dichtheitsgrenze beim Verformen mit und ohne Dichtmedium.

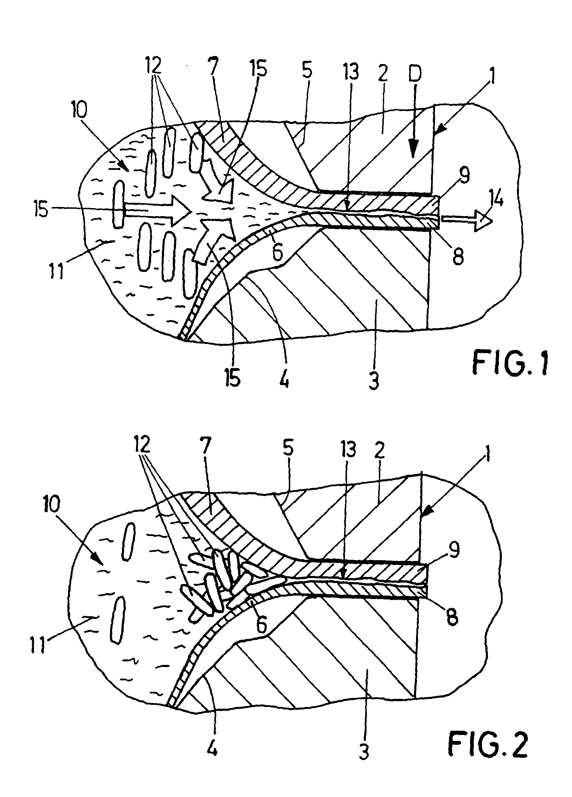

In der Fig. 1 ist eine als Ganzes mit 1 bezeichnete Werkzeugform im Bereich der flanschseitigen Einspannbacken 2, 3 erkennbar, die eine untere und obere Formfläche 4, 5 aufweist. Zwischen den beiden Einspannbacken 2, 3 sind zwei gedoppelte Blech-Rondellen 6, 7 mit ihren aufeinander liegenden Flanschabschnitten 8, 9 eingespannt. Die Flanschabschnitte 8, 9 sind durch die Druckkraft D der Einspannbacken 2, 3 gegeneinander abgedichtet. Nach dem Innenhochdruck-Umformen kann das Verschweißen der beiden bis dahin unverschweißten Flanschabschnitte 8, 9 erfolgen.

Das Umformen erfolgt dadurch, daß in die Kavität 10 zwischen den beiden Blech-Rondellen 6, 7 eine isostatische Druckflüssigkeit, wie z. B. Wasser als Wirkmedium eingepreßt wird. Wie in beiden Figuren schematisch dargestellt ist, ist diesem Wirkmedium 11 ein Dichtmedium in Form von Faserpartikeln 12 beigemischt, bei denen es sich beispielsweise um hochverzweigte, hochdichte Polyethylen-Füllstofffasern mit einer Länge zwischen 0,1 mm und 2,0 mm und einer Faserstärke von 10 bis 40 um handelt. Derartige Polymer-Fasern sind kommerziell erhältlich.

Wie nun in Fig. 1 angedeutet ist, besteht an einer Stelle zwischen den beiden Flanschabschnitten 8, 9 ein Leck 13 zwischen den beiden Blech-Rondellen 6, 7, durch das das Wirkmedium 11 austreten kann (Pfeil 14). Dies bedingt eine Strömung in der Kavität 10 vor dem Leck 13, die in Fig. 1 durch die Pfeile 15 angedeutet ist. Diese Strömung 15 führt dazu, daß die Faserpartikel 12 in Richtung zum Leck 13 transportiert werden und sich davor absetzen. Wie dies in Fig. 2 dargestellt ist, wird das Leck 13 durch die Faserpartikel 12 zugesetzt, wodurch der Austritt des Wirkmediums 11 durch das Leck 13 gestoppt wird.

Die Beimischung des Dichtmediums zum Wirkmedium kann vor dem Einführen des Wirkmediums in die Kavität 10 zwischen den beiden Blech-Rondellen 6, 7 und dem damit verbundenen Innenhochdruck-Umformen stattfinden.

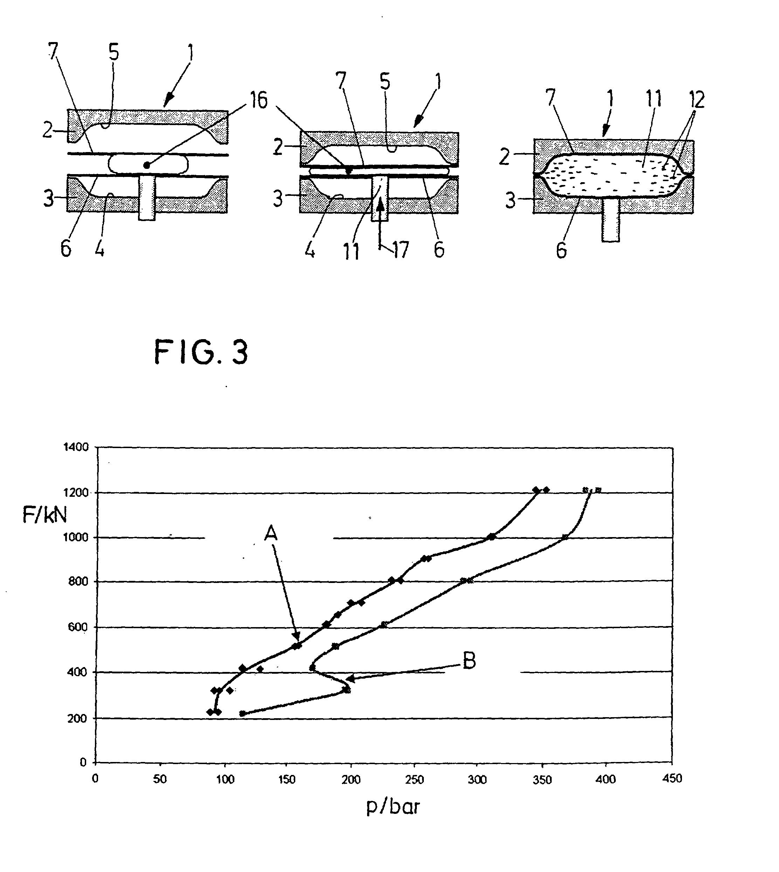

Als Alternative dazu kann, wie dies in Fig. 3 angedeutet ist, eine als Ganzes mit 16 bezeichnete Ansammlung von Faserpartikeln in trockenem Zustand zwischen den beiden Blech-Rondellen 6, 7 eingelegt und diese anschließend in die Werkzeugform 1 verbracht werden. Anschließend wird die Werkzeugform durch Zusammenfahren der Einspannbacken 2, 3 geschlossen und das Wirkmedium zwischen die Blech-Rondellen 6, 7 eingeführt (Pfeil 17 in Fig. 3, Mitte). Dadurch vermischen sich Wirkmedium 11 und Faserpartikel 12 und es kann der oben beschriebene Dichtmechanismus beim Innenhochdruck-Umformen der beiden Blech-Rondellen 6, 7 (siehe Fig. 3, rechte Darstellung) stattfinden.

Die Wirksamkeit des Dichtmediums ist durch entsprechende Versuche erwiesen. So zeigt Fig. 4 ein Kurvenschaubild, auf dessen x-Achse der Innendruck p in bar und auf dessen y-Achse die Niederhaltekraft F in kN der Einspannbacken 2, 3 aufgetragen sind. Die mit rautenförmigen Punkten unterlegte Kurve A zeigt die Dichtheitsgrenze der Werkzeugform 1 ohne Verwendung von Dichtpartikeln, während die mit quadratischen Punkten unterlegte Kurve B die Dichtheitsgrenze der Werkzeugform mit dem Wirkmedium zugemischten Faserpartikeln wiedergibt. Wie sich daraus unmittelbar ergibt, ist die Dichtheitsgrenze, d. h. das jeweilige Wertepaar von Innendruck und Niederhaltekraft, bei dem die zwischen den Blech-Rondellen 6, 7 liegende Kavität signifikant undicht wird, bei übereinstimmenden Niederhaltekräften zu höheren Innendruckwerten verschoben.

## Patentansprüche

1. Verfahren zur wirkmedienbasierten Umformung von Blech-Werkstücken (6, 7) mit folgenden Verfahrensschritten:
- druckdichtes Einspannen mindestens eines Blech-Werkstückes (6, 7) in eine Werkzeugform (11) unter Bildung einer an das Blech-Werkstück (6, 7) angrenzenden Kavität (10),
- Einbringen eines flüssigen Wirkmediums (11) unter hohem Druck in die Kavität (10), und
- Beaufschlagung des mindestens einen Blech-Werkstückes (6, 7) durch das Wirkmedium (11) zur Umformung des Blech-Werkstückes (6, 7),
**dadurch gekennzeichnet, daß** dem Wirkmedium (11) ein Dichtmedium (12) beigemischt wird, das sich im Falle einer Leckage des Wirkmediums (11) aus der Kavität (10) vor das Leck (13) legt und dieses zusetzt.

2. Verfahren nach Anspruch 1, **dadurch gekennzeichnet, daß** als Dichtmedium Festkörper-Partikel (12) eingesetzt werden.

3. Verfahren nach Anspruch 2, **dadurch gekennzeichnet, daß** als Festkörperpartikel Faserpartikel (12) mit einer Faserlänge in der Größenordnung von 0,1 mm bis 2,0 mm verwendet werden.

4. Verfahren nach Anspruch 3, **dadurch gekennzeichnet, daß** verzweigte Polymer-Füllstoff-Fasern als Faserpartikeln (12) verwendet werden.

5. Verfahren nach Anspruch 4, **dadurch gekennzeichnet, daß** hochdichte Polyethylenfasern einer Faserstärke von 10 µm bis 40 µm, vorzugsweise 30 µm, als Dichtmedium verwendet werden.

6. Verfahren nach Anspruch 3, **dadurch gekennzeichnet, daß** Naturfasern, insbesondere Baumwoll-, Zellulose- oder Jute-Fasern verwendet werden.

7. Verfahren nach Anspruch 1, **dadurch gekennzeichnet, daß** als Dichtmedium hochviskose oder gelartige Flüssigpartikel oder polymerisierbare Monomere verwendet werden.

8. Verfahren nach einem der Ansprüche 1 bis 6, **dadurch gekennzeichnet, daß** das Wirkmedium (11) mit einem beigemischten Dichtmedium (12) beim Innenhochdruck-Umformen zwischen zwei Blech-Werkstücken (6, 7) eingebracht wird.

9. Verfahren nach einem der Ansprüche 1 bis 7, **dadurch gekennzeichnet, daß** das Dichtmedium vor dem Einführen des Wirkmediums (11) in die Kavität (10) dort deponiert wird.

10. Verwendung eines flüssigen Wirkmediums bei der Durchführung des Verfahrens nach einem der Ansprüche 1 bis 9, **dadurch gekennzeichnet daß**, dem Wirkmedium ein Dichtmedium (12),insbesondere in Form von Polymer- oder Naturfaser-Partikeln, beigemischt ist.

## Claims

1. A method of active-medium based forming of sheet metal work pieces (6, 7), comprising the following steps:
- pressure sealed clamping at least one sheet metal work piece (6., 7) in a mold tool (1) with a cavity (10) being produced that adjoins the sheet metal work piece (6, 7);
- inserting an active fluid (11) under high pressure into the cavity (10); and
- acting on the at least one sheet metal work piece (6, 7) by the active fluid (11) for forming the sheet metal work piece (6, 7);
**characterized in that** leakproofing material (12) is admixed to the active fluid (11), which, in the case of leakage of the active fluid (11) from the cavity (10), accumulates in front of the leak (13) and plugs it.

2. A method according to claim 1, **characterized in that** solid particles (12) are used as leakproofing material.

3. A method according to claim 2, **characterized in that** fibrous particles (12) of a fiber length in the range of 0.1 mm to 2.0 mm are used as solid particles.

4. A method according to claim 3, **characterized in that** branched polymer filler fibers are used as fibrous particles (12).

5. A method according to claim 4, **characterized in that** highly compact polyethylene fibers of a fiber thickness of 10 µm to 40 µm, preferably 30 µm, are used as leakproofing material.

6. A method according to claim 3, **characterized in that** natural fibers are used, in particular cotton, cellulose or jute fibers.

7. A method according to claim 1, **characterized in that** highly viscous or gelatinous liquid particles or polymerizable monomers are used as leakproofing material.

8. A method according to one of claims 1 to 6, **characterized in that,** in internal high-pressure forming, the active fluid (11) and the admixed leakproofing material (12) are inserted between two sheet metal work pieces (6, 7).

9. A method according to one of claims 1 to 7, **characterized in that** the leakproofing material is deposited in the cavity (10) prior to insertion of the active fluid (11) into the cavity (10).

10. Use of an active fluid in putting into practice the method according to one of claims 1 to 9, **characterized in that** leakproofing material (12), in particular in the form of polymer or natural fiber particles, is admixed to the active fluid.

## Revendications

1. Méthode de formage de tôles (6, 7) par agent sous pression, comprenant les étapes suivantes :
- serrage tenant à la pression d'au moins une tôle (6, 7) dans une matrice (11) en formant une cavité (10) adjacente à la tôle (6, 7),
- introduction d'un agent liquide (11) sous haute pression dans la cavité (10), et
- constriction de ladite tôle (6, 7) par l'agent (11) pour le formage de la tôle (6, 7),
**caractérisée en ce que** l'agent (11) est mélangé à un joint (12) qui, en cas de fuite de l'agent (11) de la cavité (10), se place avant la fuite (13) et s'ajoute à ce dernier.

2. Méthode selon la revendication 1, **caractérisée en ce que** l'on met en oeuvre comme joint des particules solides (12).

3. Méthode selon la revendication 2, **caractérisée en ce que** l'on utilise comme particules solides des particules fibreuses (12) ayant une longueur de fibres d'un ordre de grandeur allant de 0,1 mm à 2,0 mm.

4. Méthode selon la revendication 3, **caractérisée en ce que** l'on utilise des fibres de charge d'un polymère ramifié comme particules fibreuses (12).

5. Méthode selon la revendication 4, **caractérisée en ce que** des fibres de polyéthylène à haute densité d'une épaisseur de 10µm à 40µm, de préférence 30 µm, sont utilisées comme joint.

6. Méthode selon la revendication 3, **caractérisée en ce que** l'on utilise des fibres naturelles, en particulier des fibres de coton, de cellulose et de jute.

7. Méthode selon la revendication 1, **caractérisée en ce que** l'on utilise des particules liquides hautement visqueuses ou de type gel ou des monomères polymérisables comme joint.

8. Méthode selon l'une quelconque des revendications 1 à 6, **caractérisée en ce que** l'agent (11) avec un joint mélangé (12) est introduit entre deux tôles (6, 7) lors du formage sous haute pression interne.

9. Méthode selon l'une quelconque des revendications 1 à 7, **caractérisée en ce que** le joint est déposé dans la cavité (10) avant l'introduction de l'agent (11).

10. Utilisation d'un agent liquide lors de la réalisation de la méthode selon l'une quelconque des revendications 1 à 9, **caractérisée en ce que** l'agent est mélangé à un joint (12), en particulier sous forme de particules de polymères ou de fibres naturelles.
